# EUROPEAN PATENT APPLICATION

(11) **EP 4 793 749 A1**
(43) Date of publication of application: **19.08.2026**
(21) Application number: 26157740.7
(22) Date of filing: 11.02.2026
(51) Int. Cl.: G06F 3/12

(54) **INFORMATION PROCESSING DEVICE, AND PROGRAM**

(30) Priority: 14.02.2025 JP 2025022017
(71) Applicant: Seiko Instruments Inc., Chiba-shi, Chiba 261-8507 (JP)
(72) Inventor: TSURUOKA, Naoto, Chiba-shi, 261-8507 (JP)
(74) Representative: Lewis Silkin LLP

(57) **Abstract**

An information processing device (10), includes a display control module (105) configured to display a layout frame in which an object is arrangeable; a division operation reception module (101) configured to receive a division operation of dividing the layout frame; a division processing module (102) configured to divide the layout frame into a plurality of layout frames based on the division operation; a selection operation reception module (103) configured to receive a selection operation of selecting an object to be arranged in a certain one layout frame of the plurality of layout frames; an arrangement module (104) configured to arrange the object in the certain one layout frame based on the selection operation; and a data output module (106) configured to output an arrangement of the object as print data.

## Description

### BACKGROUND OF THE INVENTION

### 1. Field of the Invention

The present invention relates to an information processing device and a program.

### 2. Description of the Related Art

At the time of editing print data for printing a label, it is often required to adjust a position of an object on the label, or to adjust a size of the object. Hitherto, there has been proposed a system for supporting such editing work (see Japanese Patent Application Laid-open No. 2010-086144).

In the above-mentioned related-art technology, a user is required to add objects such as text, an image, a graphic, or a barcode to an editing screen, and then arrange the added objects while adjusting the size and position of each object, and hence there is a problem in that this type of editing work may be extremely tedious for users who are not accustomed to such work.

An object of the present invention is to enable a label printing layout to be easily created.

According to at least one embodiment of the present invention, it is possible to enable a label printing layout to be easily created.

### SUMMARY OF THE INVENTION

According to one embodiment of the present invention, there is provided an information processing device, including a display control module configured to display a layout frame in which an object is arrangeable; a division operation reception module configured to receive a division operation of dividing the layout frame; a division processing module configured to divide the layout frame into a plurality of layout frames based on the division operation; a selection operation reception module configured to receive a selection operation of selecting an object to be arranged in a certain one layout frame of the plurality of layout frames; an arrangement module configured to arrange the object in the certain one layout frame based on the selection operation; and a data output module configured to output an arrangement of the object as print data.

Preferably, the information processing device according to the one embodiment of the present invention, further includes a change operation reception module configured to receive a layout frame change operation of simultaneously changing dimensions of a plurality of layout frames which are adjacent among the plurality of layout frames, wherein the arrangement module is configured to rearrange, for each of the plurality of layout frames after the layout frame change operation, a plurality of the objects based on the changed dimensions of the plurality of layout frames.

Preferably, the arrangement module is configured to arrange the object in the layout frame based on an arrangement rule corresponding to a type of the object.

Preferably, the arrangement module is configured to arrange the object in a center of the layout frame when the type of the object is image data.

Preferably, when the type of the object is image data, the arrangement module is configured to arrange the object in the layout frame by reducing dimensions of the object when external dimensions of the object are larger than dimensions of the layout frame, and to arrange the object in the layout frame without expanding the dimensions of the object when the external dimensions of the object are smaller than the dimensions of the layout frame.

In the above-mentioned the information processing device according to the one embodiment of the present invention, wherein the arrangement module is configured to arrange the object in the layout frame in a left-justified manner when the type of the object is character data.

Preferably, when the type of the object is character data, the arrangement module is configured to arrange the object in the layout frame by reducing dimensions of the object when external dimensions of the object are larger than dimensions of the layout frame, and to arrange the object in the layout frame by expanding the dimensions of the object when the external dimensions of the object are smaller than the dimensions of the layout frame.

Preferably, the above-mentioned the information processing device according to the one embodiment of the present invention, further includes a change operation reception module configured to receive a movement operation of moving the object arranged in a certain one layout frame of the plurality of layout frames to another layout frame of the plurality of layout frames, wherein the arrangement module is configured to arrange the object in the another layout frame to which the object is to be moved based on an arrangement rule corresponding to a type of the object to be moved.

According to one embodiment of the present invention, there is provided a program for causing a computer to execute: displaying a layout frame in which an object is arrangeable; receiving a division operation of dividing the layout frame; dividing the layout frame into a plurality of layout frames based on the division operation; receiving a selection operation of selecting an object to be arranged in a certain one layout frame of the plurality of layout frames; arranging the object in the certain one layout frame based on the selection operation; and outputting an arrangement of the object as print data.

### BRIEF DESCRIPTION OF THE DRAWINGS

FIG. 1 is a diagram for illustrating an example of a function configuration of an information processing system in at least one embodiment of the present invention.
FIG. 2 is a flow chart for illustrating an example of a flow of operations of the information processing system in the at least one embodiment.
FIG. 3 is a view for illustrating an example of a layout screen in the at least one embodiment.
FIG. 4 is a view for illustrating an example of the layout screen in the at least one embodiment after left/right division.
FIG. 5 is a view for illustrating an example of the layout screen in the at least one embodiment before upper/lower division.
FIG. 6 is a view for illustrating an example of the layout screen in the at least one embodiment after upper/lower division.
FIG. 7 is a view for illustrating an example of a layout screen in the at least one embodiment.
FIG. 8 is a view for illustrating an example of a layout screen in the at least one embodiment.
FIG. 9 is a view for illustrating an example of a layout screen in the at least one embodiment.
FIG. 10 is a view for illustrating an example of a layout screen in the at least one embodiment.
FIG. 11 is a view for illustrating an example of a layout screen in the at least one embodiment.
FIG. 12 is a view for illustrating an example of a layout screen in the at least one embodiment.
FIG. 13 is a view for illustrating an example of a layout screen in the at least one embodiment.
FIG. 14 is a view for illustrating an example of a layout screen in the at least one embodiment.

### DESCRIPTION OF THE EMBODIMENTS

An information processing system 1 in at least one embodiment of the present invention is described with reference to the drawings. The at least one embodiment described below is described merely as an example, and the present invention can be applied to any embodiment without being limited to the at least one embodiment described below.

Throughout the drawings for illustrating the at least one embodiment, components having the same function are denoted by identical reference symbols, and a duplicate description thereof is omitted.

Further, "based on XX" as used herein means "based on at least XX," including a case which is based on another element in addition to XX. Further, "based on XX" is not limited to a case in which XX is directly used, and a case which is based on an object obtained by performing calculation or processing on XX is also included. "XX" is any element (for example, any information).

### <At Least One Embodiment>

Now, referring to the drawings, the at least one embodiment of the present invention is described.

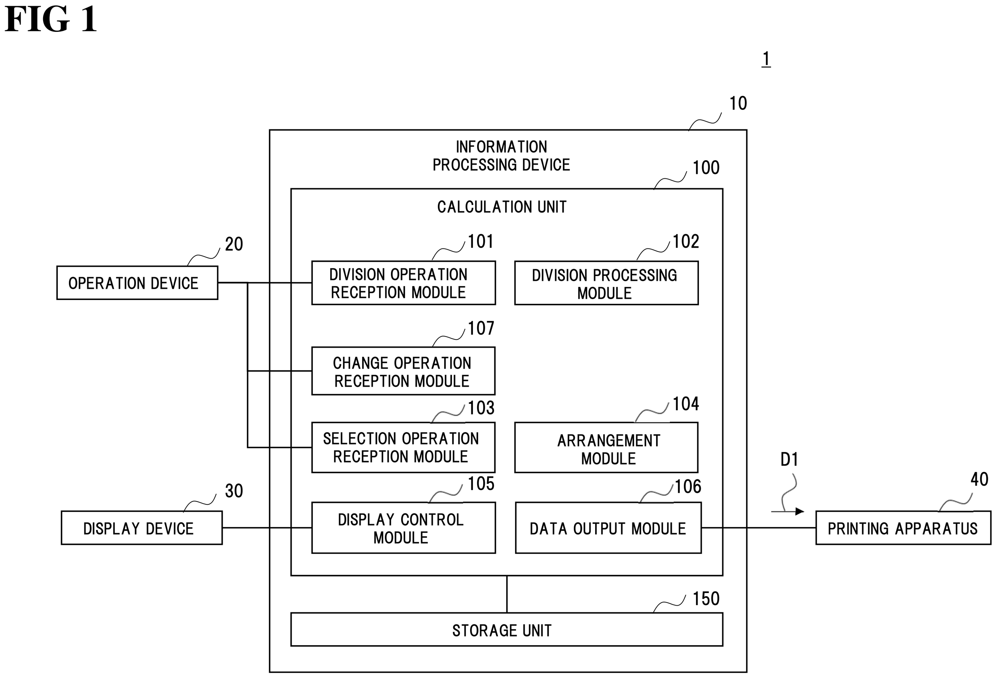

FIG. 1 is a diagram for illustrating an example of a function configuration of the information processing system 1 in the at least one embodiment. The information processing system 1 includes an information processing device 10, an operation device 20, a display device 30, and a printing apparatus 40.

The information processing device 10 is a device which is operated by a user in order to edit a layout of objects. The information processing device 10 is a computer device such as a personal computer or a tablet device, and includes a calculation unit 100 and a storage unit 150.

The calculation unit 100 includes a central processing unit (CPU), and provides various types of functions by operating based on programs and data stored in the storage unit 150.

The storage unit 150 includes, for example, a hard disk drive or a semiconductor memory (flash memory, random-access memory (RAM), read-only memory (ROM)), and stores various types of information such as programs and data read out by the CPU of the calculation unit 100.

The operation device 20 includes, for example, an operating device such as a keyboard, a mouse, and a touch panel, is operated by the user, and outputs an operation result to the information processing device 10.

The display device 30 includes, for example, a liquid crystal display, and displays an image output by the information processing device 10 to the user.

The printing apparatus 40 is, for example, a label printer, and prints a label based on print data D1 output by the information processing device 10.

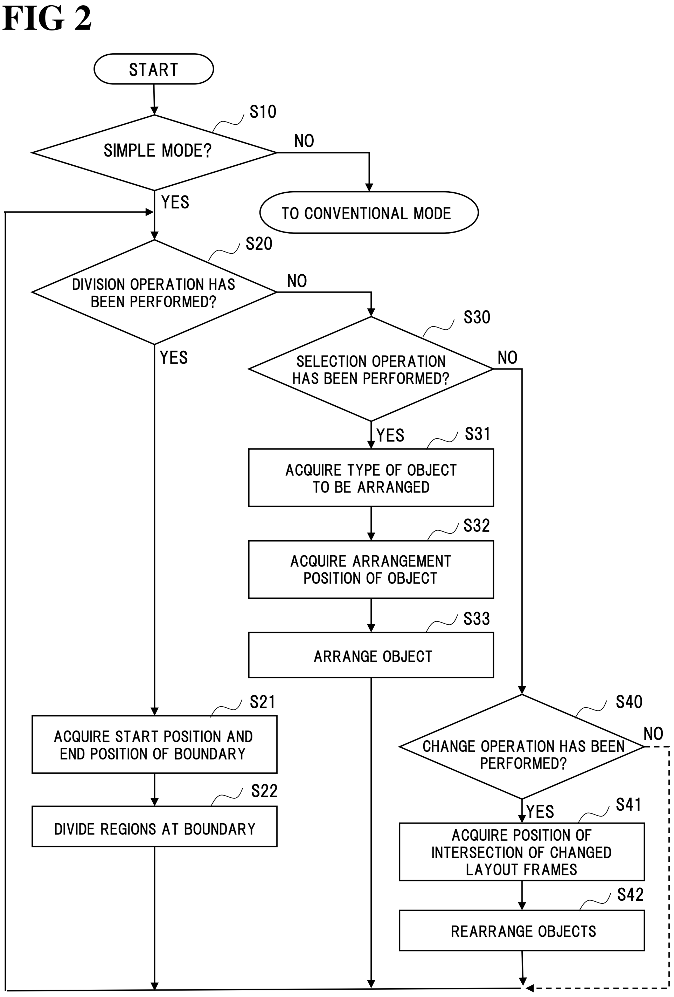

The calculation unit 100 of the information processing device 10 has various functions for editing the print data D1. In the at least one embodiment, the calculation unit 100 includes, as function modules thereof, a division operation reception module 101, a division processing module 102, a selection operation reception module 103, an arrangement module 104, a display control module 105, a data output module 106, and a change operation reception module 107. The configuration and operation of each of those function modules are described in detail objwith reference to FIG. 2.

FIG. 2 is a flow chart for illustrating an example of a flow of operations of the information processing system 1 in the at least one embodiment.

(Step S10) The calculation unit 100 determines whether or not an editing mode is set to a "simple mode." The label editing mode may be set to any one of a "conventional mode" and the "simple mode."

The term "conventional mode" refers to an editing mode in which the user freely sets, for the objects that form a label, the position and the size of the objects on the label. In the conventional mode, the user may freely set the positions and the sizes of the objects, but the work to set the positions and the sizes is complicated and requires skill, and is thus unsuitable for, for example, people who are novices in layout editing work in terms of the point that the editing is not easy to perform.

The term "simple mode" refers to the label layout editing mode described in the at least one embodiment.

The user can select any one of the conventional mode and the simple mode as the label layout editing mode. As an example, the display control module 105 displays a layout screen P1-1 on the display device 30.

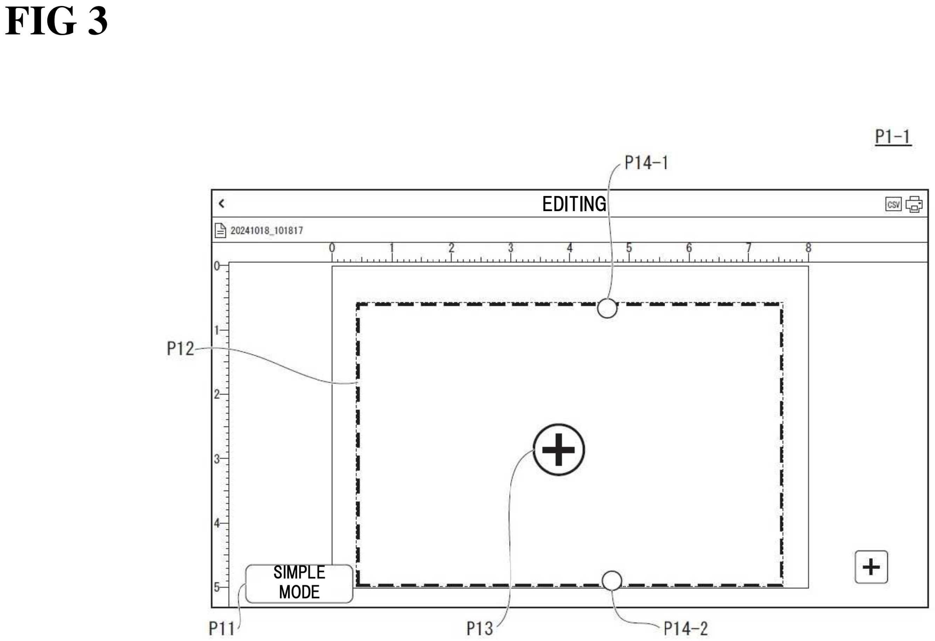

FIG. 3 is a view for illustrating an example of the layout screen P1-1 in the at least one embodiment. The layout screen P1-1 includes a simple mode button P11. The simple mode button P11 is a button image for selecting any one of the conventional mode and the simple mode as the label layout editing mode. Each time the user operates the simple mode button P11, the editing mode switches between the conventional mode and the simple mode.

Returning to FIG. 2, when the calculation unit 100 determines that the conventional mode is selected (that is, the simple mode is not selected) ("NO" in Step S10), the calculation unit 100 executes conventional mode processing. Description of a flow of layout editing operations in the conventional mode is omitted here. When the calculation unit 100 determines that the simple mode is selected ("YES" in Step S10), the process advances to Step S20.

### <Layout Frame Division Operation>

(Step S20) The calculation unit 100 determines whether or not the user has performed an operation to divide the layout frame. Returning to FIG. 3, description of the layout frame division operation is now given.

The layout screen P1-1 includes a layout frame P12 and an object arrangement button P13. The layout frame P12 is a frame which indicates the position at which an object to be printed on the label is arranged. One object is arranged in one layout frame P12. That is, the number of layout frames P12 indicates the number of objects to be arranged on the label. As an example, in FIG. 3, one layout frame P12 is illustrated on the layout screen P1-1. This indicates that one object can be arranged on the entire surface of the label.

The object arrangement button P13 is an operation image that is operated at the time of arranging the object in the layout frame P12. When the user selects the type of the object and selects the object arrangement button P13, the selected object is arranged in the layout frame P12 that includes the selected object arrangement button P13.

When the user wants to increase the number of objects to be arranged on the label, the user performs an operation to divide the layout frame. In this example, a case in which the layout frame is divided into left and right is described.

The user selects, among the four sides of the layout frame P12, any position on an upper side and any position on a lower side. In this example, a division upper edge position P14-1 is selected as the position of the upper side, and a division lower edge position P14-2 is selected as the position of the lower side.

The division upper edge position P14-1 indicates a start position of a boundary line that divides the layout frame into left and right. The division lower edge position P14-2 indicates an end position of the boundary line that divides the layout frame into left and right.

Returning to FIG. 2, when the start position and the end position on the layout frame have not been selected, the calculation unit 100 determines that a division operation has not been performed ("NO" in Step S20), and the process advances to Step S30. When the start position and the end position on the layout frame have been selected, the calculation unit 100 determines that a division operation has been performed ("YES" in Step S20), and the process advances to Step S21.

(Step S21) The division operation reception module 101 acquires the start position and the end position of the boundary line of the layout frame. In the example described above, the division operation reception module 101 acquires the division upper edge position P14-1 as the start position and the division lower edge position P14-2 as the end position.

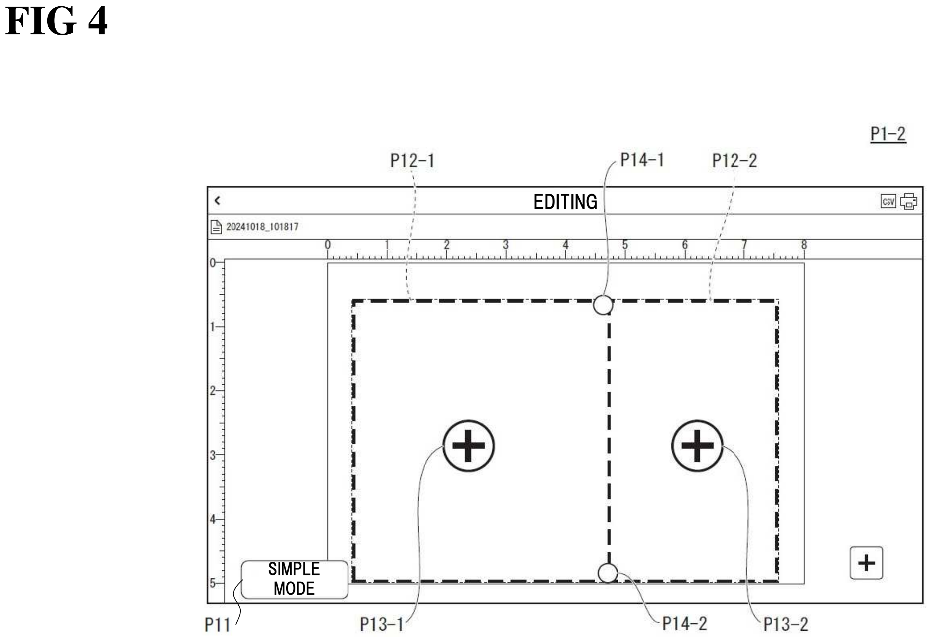

(Step S22) The division processing module 102 divides the layout frame based on the start position and the end position acquired by the division operation reception module 101 in Step S21. In this example, among the four sides of the layout frame, the upper side is selected as the start position and the lower side is selected as the end position. In this case, the division processing module 102 divides the layout frame into left and right. An example of the layout frame after division is illustrated in FIG. 4.

FIG. 4 is a view for illustrating an example of a layout screen P1-2 in the at least one embodiment after left/right division. The layout screen P1-2 includes a left layout frame P12-1 and a right layout frame P12-2. The left layout frame P12-1 displays a left object arrangement button P13-1. The right layout frame P12-2 displays a right object arrangement button P13-2. This example shows that two objects are arrangeable across the entire label.

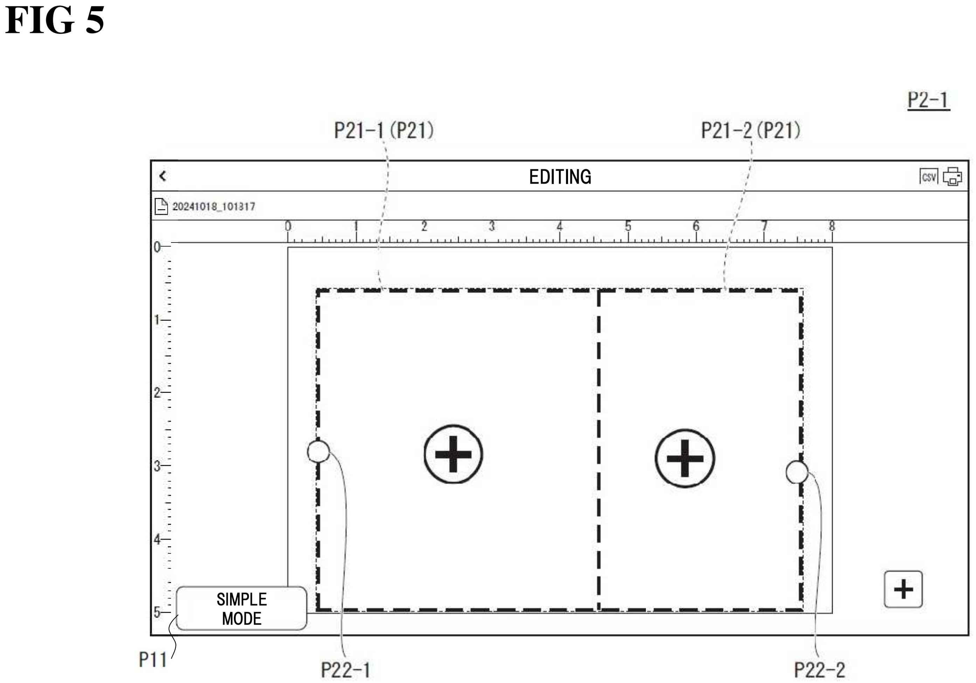

In the above, the division operation in the horizontal direction of the layout frame has been described. The layout frame can also be divided in the vertical direction. An example of a division operation in the vertical direction is now described with reference to FIG. 5.

FIG. 5 is a view for illustrating an example of a layout screen P2-1 in the at least one embodiment before upper/lower division. The layout screen P2-1 displays a layout frame P21. In this example, the layout frame P21 has already been divided into a left layout frame P21-1 and a right layout frame P21-2.

The user selects, among the four sides of the layout frame P21, any position on a left side and any position on a right side. In this example, a division left edge position P22-1 is selected as the position of the left side, and a division right edge position P22-2 is selected as the position of the right side.

The division left edge position P22-1 indicates a start position of a boundary line that divides the layout frame into upper and lower sections. The division right edge position P22-2 indicates an end position of the boundary line that divides the layout frame into upper and lower sections.

The division operation reception module 101 acquires the start position and the end position of the boundary line of the layout frame in a similar manner to that in Step S21 described above. That is, in this example of upper/lower division, the division operation reception module 101 acquires the division left edge position P22-1 as the start position and the division right edge position P22-2 as the end position.

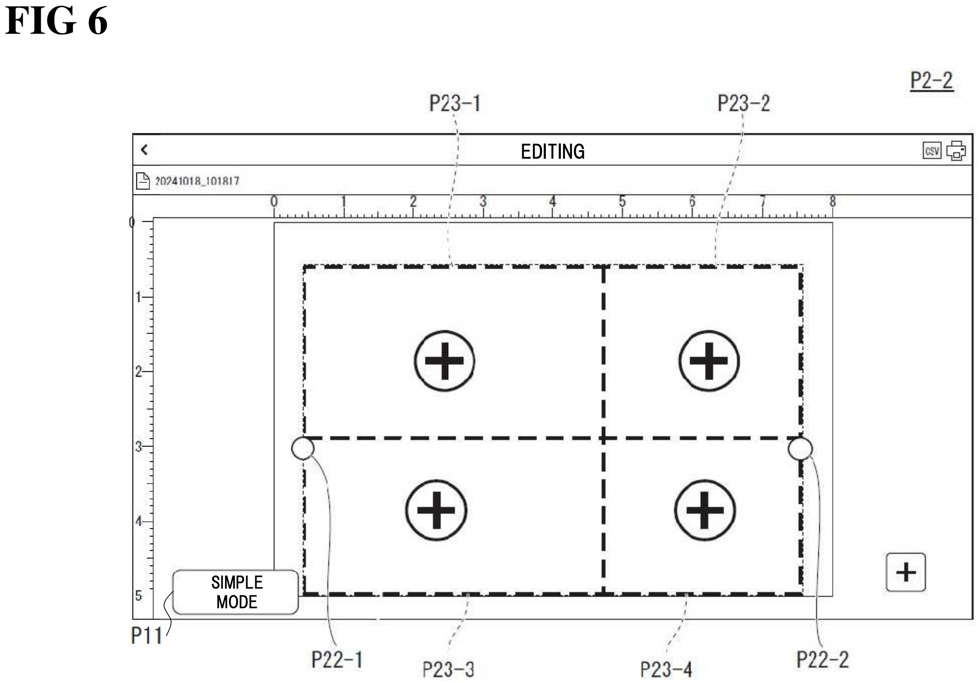

The division processing module 102 divides the layout frame P21 into upper and lower sections in a similar manner to that in Step S22 described above. An example of the layout frame after upper/lower division is illustrated in FIG. 6. In this example, the layout frame, which has already been divided into left and right, is further divided into upper and lower sections. In this case, the layout frame is divided into four sections horizontally and vertically.

FIG. 6 is a view for illustrating an example of a layout screen P2-2 in the at least one embodiment after upper/lower division. The layout screen P2-2 includes an upper-left layout frame P23-1, an upper-right layout frame P23-2, a lower-left layout frame P23-3, and a lower-right layout frame P23-4. This example shows that four objects are arrangeable across the entire label.

### <Object Selection Operation>

(Step S30) Returning to FIG. 2, the calculation unit 100 determines whether or not the user has performed an object selection operation.

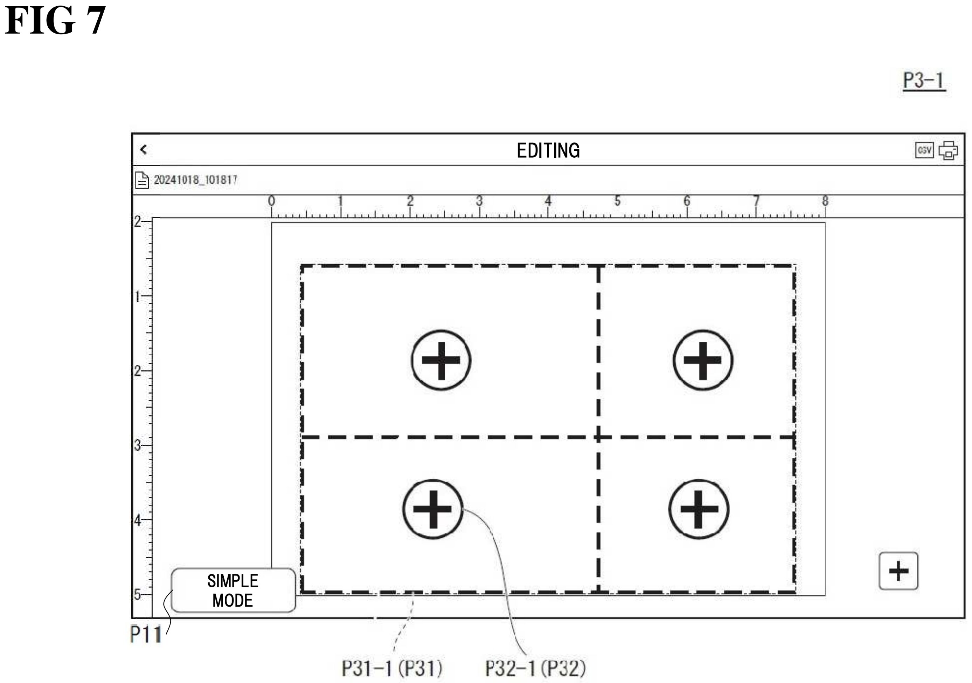

FIG. 7 is a view for illustrating an example of a layout screen P3-1 in the at least one embodiment. The layout screen P3-1 includes layout frames P31 and object arrangement buttons P32. The layout frames P31 are layout frames obtained by dividing the layout frame into four layout frames vertically and horizontally. Each object arrangement button P32 is an operation image that is operated at the time of selecting, from among the plurality of layout frames, the layout frame in which a selected object is to be to arranged.

In order to arrange an object in a lower-left layout frame P31-1, the user operates, among the object arrangement buttons P32 present in the layout frames P31 divided vertically and horizontally, a lower-left object arrangement button P32-1.

Returning to FIG. 2, when the object arrangement button P32 has not been operated, the calculation unit 100 determines that an object selection operation has not been performed ("NO" in Step S30), and the process advances to Step S40. When the object arrangement button P32 has been operated, the calculation unit 100 determines that an object selection operation has been performed ("YES" in Step S30), and the process advances to Step S31.

(Step S31) The selection operation reception module 103 receives a selection operation. The term "selection operation" is an operation to select the type of the object to be arranged in the layout frame.

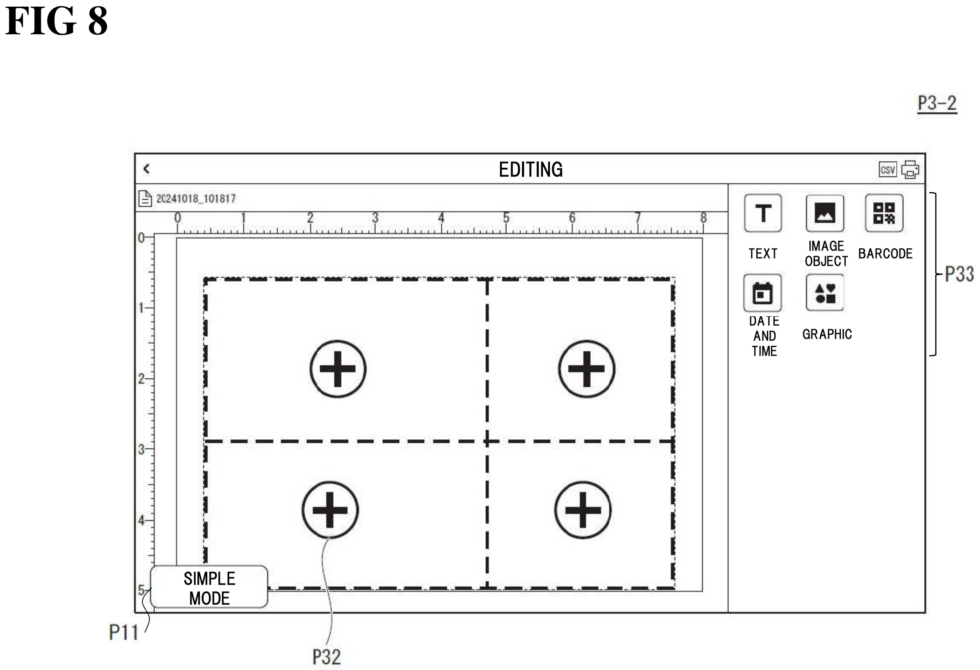

FIG. 8 is a view for illustrating an example of a layout screen P3-2 in the at least one embodiment. The layout screen P3-2 includes the above-mentioned object arrangement buttons P32 and a menu field P33. The menu field P33 is a display field for receiving an operation to select the type of the object to be arranged in the layout frame.

The types of objects include, for example, text, an image object, a barcode, date and time, and a graphic. Text is an object composed of text data such as characters and symbols. An image object is an object composed of an image file. A barcode is an object obtained by graphically encoding, for example, specific numerals, symbols, or a uniform resource locator (URL) combining numerals and symbols. Date and time is an object in which a command to merge and print the date and time at the time of label printing is embedded. The graphic is an object composed of graphics and symbols drawn by using, for example, a graphics editor provided by the information processing device 10.

The user selects the type of the object to be arranged in the layout frame from the object types displayed in the menu field P33. The selection operation reception module 103 detects the operation by the user in the menu field P33, and determines which type of object has been selected.

(Step S32) Returning to FIG. 2, the selection operation reception module 103 acquires an arrangement position of the object. For example, the user operates the object arrangement button P32 illustrated in FIG. 8 (in this example, the object arrangement button displayed in the lower-left layout frame P31). In this case, the selection operation reception module 103 determines that the lower-left layout frame P31 has been selected from among the plurality of layout frames.

The operating procedure of Step S31 and Step S32 can be configured in a variety of ways. In the above-mentioned example, the user selects the object type in the menu field P33 and then operates the object arrangement button P32, but the operating procedure is not limited thereto.

For example, the user may operate the object arrangement button P32 to determine the arrangement position of the object, and then select the object type in the menu field P33.

Further, for example, the user may decide the type of the object to be arranged in the layout frame by dragging an icon image indicating the object type displayed in the menu field P33 onto the position of the object arrangement button P32.

That is, in the selection operation, it is sufficient that a link is created between the layout frame into which the object is to be arranged and the type of the object to be arranged.

(Step S33) The arrangement module 104 arranges the object of the type selected by the user in the layout frame based on the operation results of Step S31 and Step S32.

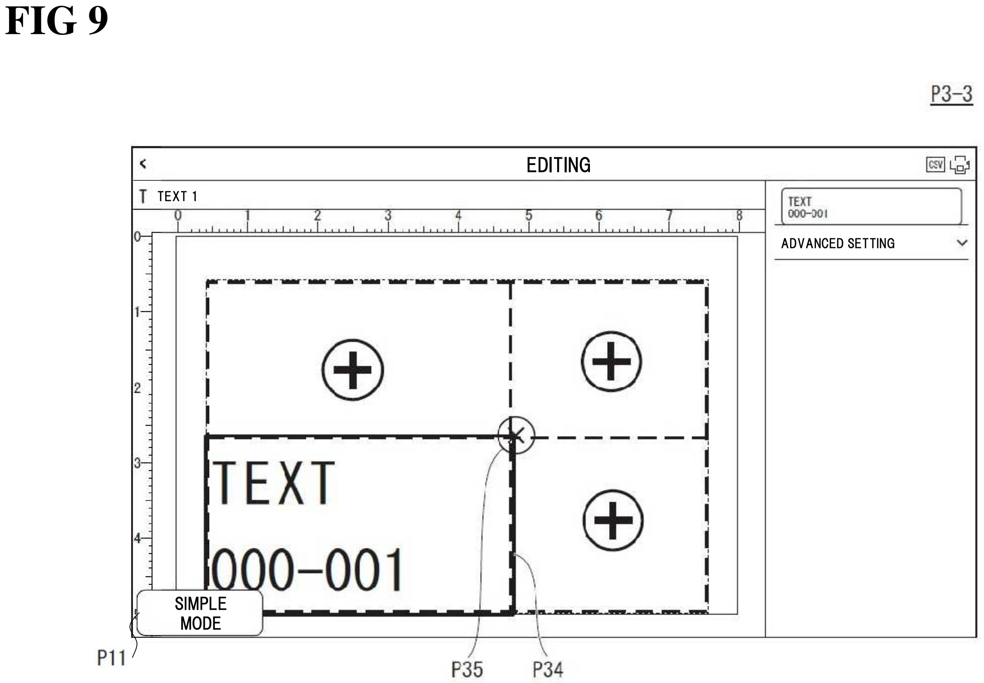

FIG. 9 is a view for illustrating an example of a layout screen P3-3 in the at least one embodiment. The layout screen P3-3 shows a state in which the object selected by the user has been arranged in the layout frame. The layout screen P3-3 includes an object P34 and a delete button P35. The object P34 is the object P34 after being arranged in the layout frame. In this example, "text" has been selected as the object type, and the object is arranged in the layout frame at the lower left. The delete button P35 is an operation image that is operated at the time of deleting the object arranged in the layout frame.

### <Automatic Arrangement Rule of Object>

The arrangement module 104 may be configured to arrange the object in the layout frame based on an arrangement rule corresponding to the type of the object.

### (1) For text data

When the object type is text data (also referred to as "character data;" the same applies hereinafter), the arrangement module 104 arranges the object so that the object is left-justified in the layout frame. With the information processing device 10 configured in this way, when the arranged text has a plurality of lines, the positions of the first characters are aligned, and hence it is possible to easily improve appearance.

When the object type is text data, the arrangement module 104 may arrange the object by centering or right-justifying the object in the layout frame. Further, the arrangement module 104 may be configured to allow the user to initially set the position at which the text data is to be aligned.

Further, when the object type is character data, the arrangement module 104 may arrange the object in the layout frame by reducing dimensions of the object when external dimensions of the object are larger than dimensions of the layout frame, and arrange the object in the layout frame by expanding the dimensions of the object when the external dimensions of the object are smaller than the dimensions of the layout frame. With the information processing device 10 configured in this way, the dimensions of the text object are automatically changed (without the operation by the user) to correspond to the dimensions of the layout frame, and hence the amount of effort required to set the print layout of the label can be reduced.

### (2) For Image object Data

When the object type is image object data (also referred to as "image data;" the same applies hereinafter), the arrangement module 104 arranges the object in the center of the layout frame. With the information processing device 10 configured in this way, the image object is arranged in the center of the layout frame, both vertically and horizontally, regardless of the dimensions of the image object, and hence it is possible to easily improve appearance.

Further, the arrangement module 104 may include a function for automatically adjusting the dimensions of the image object data. That is, when the object type is image data, the arrangement module 104 arranges the object in the layout frame by reducing the dimensions of the object when the external dimensions of the object are larger than the dimensions of the layout frame, and arranges the object in the layout frame without expanding the dimensions of the object when the external dimensions of the object are smaller than the dimensions of the layout frame. With the information processing device 10 configured in this way, the image object is arranged in the layout frame regardless of the dimensions of the image object, and hence it is possible to easily improve appearance.

### <Object Editing Operation>

The user can edit the content of the object arranged in the layout frame.

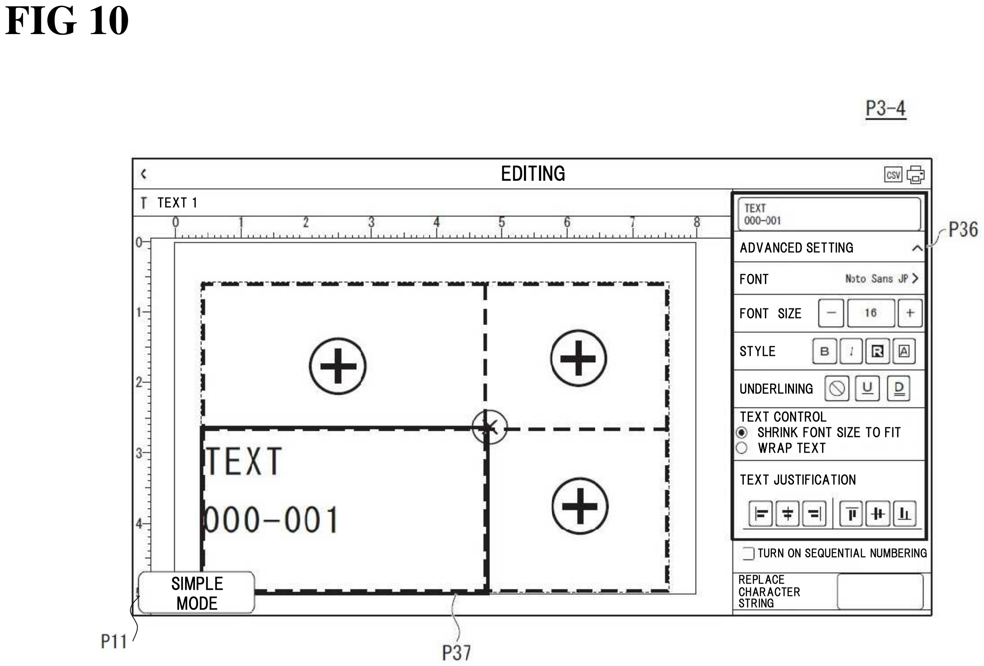

FIG. 10 is a view for illustrating an example of a layout screen P3-4 in the at least one embodiment. The layout screen P3-4 includes an editing operation field P36 and an edited text object P37. The editing operation field P36 is an operation image for receiving an operation to edit the content of the object arranged in the layout frame. The editing operation field P36 may have different editable content (object attributes) depending on the type of the object to be edited. In this example, when the object type is "text," editing items such as a text character string, a font type, a font size, a style, presence/absence and type of underlining, and the arrangement position of the text in the layout frame are displayed in the editing operation field P36.

When the editing operation field P36 is operated, the display of the object arranged in the layout frame changes in accordance with the content of the edit. In FIG. 10, a text object P37 edited to have a font set to "bold" is illustrated.

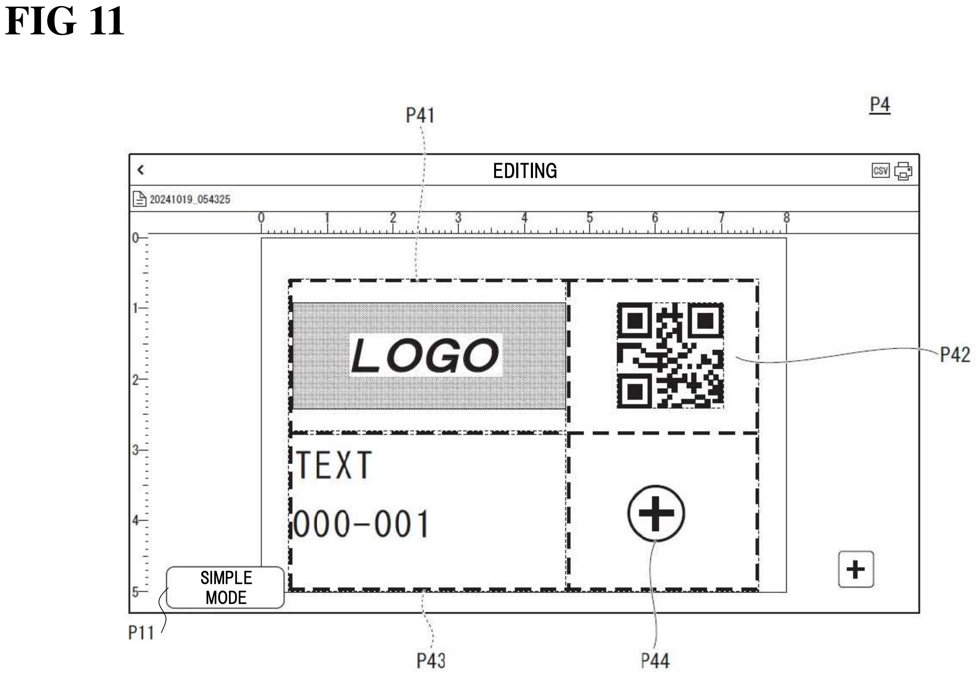

The user performs the layout work for objects on the entire surface of the label by repeatedly performing the above-mentioned layout frame division operation, object selection operation, and, as required, object editing operation. In FIG. 11, an example of a layout screen P4 after the user has finished arranging objects in the layout frames is illustrated.

FIG. 11 is a view for illustrating an example of a layout screen P4 in the at least one embodiment. The layout screen P4 includes an upper-left object P41, an upper-right object P42, and a lower-left object P43. In this example, an object is not arranged in the lower-right layout frame. An object can be added and arranged by operating the object arrangement button P44.

In the example of FIG. 11, an example of the layout of a label to be affixed to an item (for example, a commercial product) provided by a certain company is illustrated. An image object of the logo of the company that provides the item to which the label is to be affixed is displayed in the upper-left layout frame as the upper-left object P41. A barcode object which is a two-dimensional barcode of a network address for accessing information on the item to which the label is affixed is displayed in the upper-right layout frame as the upper-right object P42. A text object containing characters of, for example, the name of the item to which the label is affixed and a code for identifying the item is displayed in the lower-left layout frame as the lower-left object P43.

The information processing device 10 generates print data D1 based on information on the arrangement of the objects laid out by using the procedures described above. The information processing device 10 outputs the generated print data D1 to the printing apparatus 40 based on an operation by the user. When the printing apparatus 40 acquires the print data D1, the printing apparatus 40 prints a label having a layout corresponding to the print data D1.

As described above, the information processing device 10 includes, as function modules of the calculation unit 100, the division operation reception module 101, the division processing module 102, the selection operation reception module 103, the arrangement module 104, the display control module 105, and the data output module 106.

The display control module 105 displays a layout frame on the display device 30. An object can be arranged inside the layout frame. That is, the display control module 105 displays a layout frame in which an object is arrangeable.

The division operation reception module 101 receives a division operation, by the user, of dividing the layout frame.

The division processing module 102 divides the layout frame into a plurality of layout frames based on the division operation.

The selection operation reception module 103 receives a selection operation, by the user, of selecting an object to be arranged in a certain one layout frame of the plurality of layout frames.

The arrangement module 104 arranges the object in the certain one layout frame based on the selection operation.

The data output module 106 outputs an arrangement of the object as print data D1.

With the information processing device 10 configured in this way, the regions in which objects are to be arranged are set with the use of layout frames, and hence the requirement to adjust the size and position of each object like in the related-art is eliminated. Accordingly, with the information processing device 10 of the at least one embodiment, it is possible to easily create the print layout of a label.

### <Modification Example: Operation to Change Size of Layout Frame>

The information processing device 10 may be configured to be able to receive an operation to change the size of the layout frame. Returning to FIG. 2, description of the change operation is now given.

(Step S40) The calculation unit 100 determines whether or not the user has performed an operation to change the size of the layout frame (hereinafter also referred to simply as "change operation").

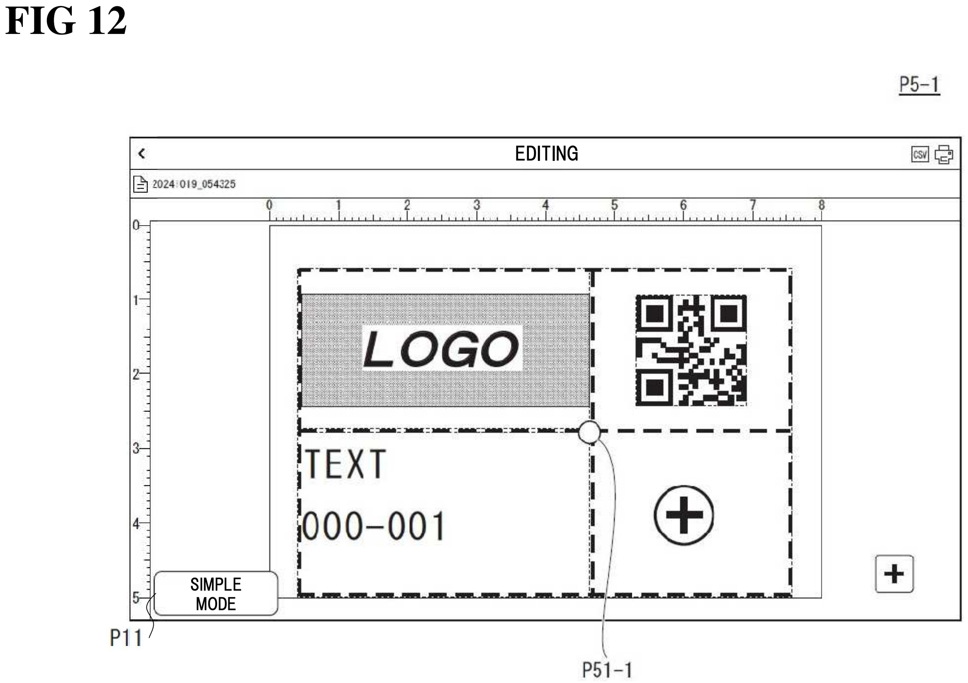

FIG. 12 is a view for illustrating an example of a layout screen P5-1 in the at least one embodiment. The layout screen P5-1 displays a layout frame intersection P51-1. The layout frame intersection P51-1 is the point at which the boundaries of the layout frames intersect. The layout frame intersection P51-1 can also be said to be an operation image that can be operated when the user performs a change operation.

Returning to FIG. 2, when the layout frame intersection P51-1 has not been operated, the calculation unit 100 determines that a change operation has not been performed ("NO" in Step S40), and the process advances to Step S20 (or to processing for determining another operation (not shown)). When the layout frame intersection P51-1 has been operated, the calculation unit 100 determines that an operation to change the size of the layout frame has been performed ("YES" in Step S40), and the process advances to Step S41.

(Step S41) The change operation reception module 107 receives the change operation. Specifically, the change operation reception module 107 acquires the position (for example, coordinates on the screen) of the intersection of the layout frames after resizing.

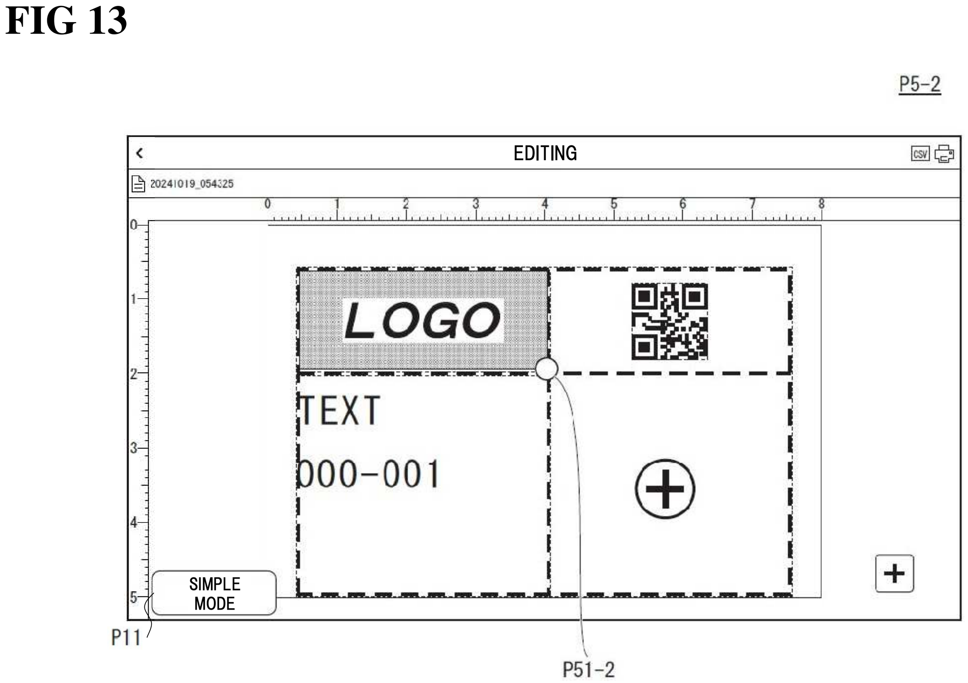

FIG. 13 is a view for illustrating an example of a layout screen P5-2 in the at least one embodiment. The layout screen P5-2 displays an intersection P51-2 of the changed layout frames. In this example, the user drags the intersection, which is an operation image, of the layout frames from a position of the intersection P51-1 of the layout frames illustrated in FIG. 12 to the intersection P51-2 of the changed layout frames illustrated in FIG. 13.

(Step S42) Returning to FIG. 2, the arrangement module 104 changes the dimensions of the layout frames based on the intersection P51-2 of the changed layout frames, and rearranges (for example, resizes) the objects in the changed layout frames.

That is, the change operation reception module 107 receives a layout frame change operation of simultaneously changing dimensions of a plurality of layout frames which are adjacent.

The arrangement module 104 rearranges, for each of the layout frames after the layout frame change operation, the plurality of objects based on the dimensions of the changed layout frames.

With the information processing device 10 configured in this way, the dimensions of a plurality of layout frames can be changed collectively by a single operation (change operation). Accordingly, with the information processing device 10 of the at least one embodiment, it is possible to easily create the print layout of the label.

The change operation reception module 107 may receive an operation (movement operation) of moving an object arranged in a layout frame to another layout frame.

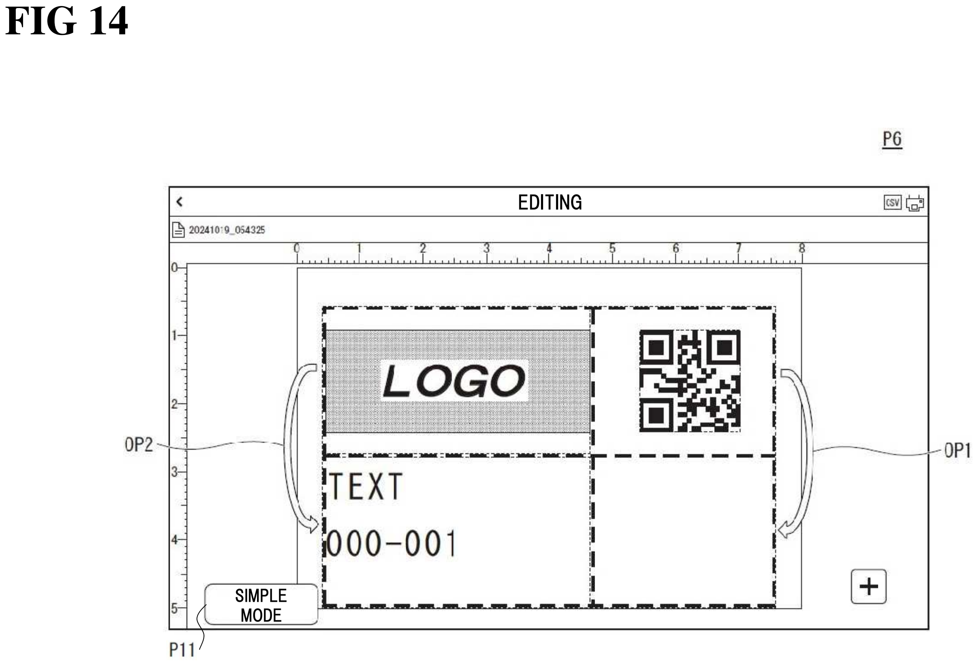

FIG. 14 is a view for illustrating an example of a layout screen P6 in the at least one embodiment. The movement operation may include an operation of moving an object arranged in another layout frame to a layout frame in which an object is not arranged (position change operation OP1), and an operation of moving an object arranged in another layout frame to a layout frame in which an object is arranged (position exchange operation OP2).

In the case of performing the position exchange operation OP2, when the change operation reception module 107 moves a first object arranged in a first layout frame to a second layout frame, the change operation reception module 107 moves a second object arranged in the second layout frame to the first layout frame. That is, when the object position exchange operation OP2 is received, the change operation reception module 107 swaps the objects between layout frames.

The arrangement module 104 rearranges the objects in the layout frames after the movement operation based on an arrangement rule that corresponds to the type of the object.

That is, the change operation reception module 107 receives the movement operation of moving the object arranged in a certain one layout frame of the plurality of layout frames to another layout frame of the plurality of layout frames.

The arrangement module 104 arranges the object in the layout frame to which the object is to be moved based on an arrangement rule corresponding to the type of the object to be moved.

With the information processing device 10 configured in this way, the arrangement of objects in a plurality of layout frames can be easily changed. Accordingly, with the information processing device 10 of the at least one embodiment, it is possible to easily create the print layout of a label.

In the above, the at least one embodiment of the present invention has been described in detail with reference to the accompanying drawings. However, specific configurations of the present invention are not limited to those of the at least one embodiment and encompass design modifications and the like without departing from the scope of the present invention as defined by the appended claims.

For example, a computer program for implementing the functions of each of the above-mentioned devices may be recorded on a computer-readable recording medium, and the program recorded on the recording medium may be read into a computer system and executed. The term "computer system" as used herein may encompass OSs as well as peripheral equipment and other types of hardware.

The term "computer-readable recording medium" refers to a flexible disk, a magneto-optical disc, a ROM, a writable non-volatile memory such as a flash memory, a portable medium such as a digital versatile disc (DVD), or a storage device such as a hard disk drive built in a computer system.

The term "computer-readable recording medium" also encompasses what holds a program for a given period of time, such as a volatile memory (such as a dynamic random access memory (DRAM)) inside a computer system that serves as a server or a client when a program is transmitted over the Internet or a similar network or via a telephone line or a similar communication line.

The program described above may be transmitted from a computer system in which the program is stored in a storage device or the like to another computer system via a transmission medium or on transmission waves in a transmission medium. The term "transmission medium" through which the program is transmitted as used herein refers to a medium having a function of transmitting information, such as the Internet or a similar network (a communication network), or a telephone line or a similar communication line (a communication wire).

The program described above may also be a program for implementing some of the functions described above. The program described above may also be what is called a differential file (a differential program), with which the functions described above can be implemented by being used in combination with a program already recorded in the computer system.

In addition, alternative methods or variations in creating and adjusting the layout frames are envisaged and included in the scope of the invention. For example, division edge positions need not span across all existing layout frames horizontally or vertically. Thus, in the example shown in Fig. 5, it would be possible to split only one of the two layout frames P21-1 or P21-2 in two, thereby creating a total of three layout frames rather than the four layout frames shown in Fig. 6.

Moreover, the change operation (S40 et seq) could also be carried out by dragging a line instead of or as well as the intersection P51-1 shown in Fig. 12. It can be conceived that in this manner it would be possible to change the size of two layout frames (for example, only the bottom two frames, or the two frames on the left) and leave the other layout frames unchanged. Of course, the sizes of more than two layout frames could also be changed at a time in this way depending on the specific implementation.

## Claims

1. An information processing device (10), comprising:
a display control module (105) configured to display a layout frame in which an object is arrangeable;
a division operation reception module (101) configured to receive a division operation of dividing the layout frame;
a division processing module (102) configured to divide the layout frame into a plurality of layout frames based on the division operation;
a selection operation reception module (103) configured to receive a selection operation of selecting an object to be arranged in a certain one layout frame of the plurality of layout frames;
an arrangement module (104) configured to arrange the object in the certain one layout frame based on the selection operation; and
a data output module (106) configured to output an arrangement of the object as print data.

2. The information processing device (10) according to claim 1, further comprising a change operation reception module (107) configured to receive a layout frame change operation of simultaneously changing dimensions of a plurality of layout frames which are adjacent among the plurality of layout frames,
wherein the arrangement module (104) is configured to rearrange, for each of the plurality of layout frames after the layout frame change operation, a plurality of the objects based on the changed dimensions of the plurality of layout frames.

3. The information processing device (10) according to claim 1 or claim 2, wherein the arrangement module (104) is configured to arrange the object in the layout frame based on an arrangement rule corresponding to a type of the object.

4. The information processing device (10) according to claim 3, wherein the arrangement module is configured to arrange the object in a center of the layout frame when the type of the object is image data.

5. The information processing device (10) according to claim 3 or claim 4, wherein, when the type of the object is image data, the arrangement module (104) is configured to arrange the object in the layout frame by reducing dimensions of the object when external dimensions of the object are larger than dimensions of the layout frame, and to arrange the object in the layout frame without expanding the dimensions of the object when the external dimensions of the object are smaller than the dimensions of the layout frame.

6. The information processing device (10) according to any one of claims 3 to 5, wherein the arrangement module (104) is configured to arrange the object in the layout frame in a left-justified manner when the type of the object is character data.

7. The information processing device (10) according to any one of claims 3 to 6, wherein, when the type of the object is character data, the arrangement module (104) is configured to arrange the object in the layout frame by reducing dimensions of the object when external dimensions of the object are larger than dimensions of the layout frame, and to arrange the object in the layout frame by expanding the dimensions of the object when the external dimensions of the object are smaller than the dimensions of the layout frame.

8. The information processing device (10) according to any one of the preceding claims, further comprising a change operation reception module (107) configured to receive a movement operation of moving the object arranged in a certain one layout frame of the plurality of layout frames to another layout frame of the plurality of layout frames,
wherein the arrangement module (104) is configured to arrange the object in the another layout frame to which the object is to be moved based on an arrangement rule corresponding to a type of the object to be moved.

9. A program for causing a computer to execute:
displaying a layout frame in which an object is arrangeable;
receiving a division operation of dividing the layout frame;
dividing the layout frame into a plurality of layout frames based on the division operation;
receiving a selection operation of selecting an object to be arranged in a certain one layout frame of the plurality of layout frames;
arranging the object in the certain one layout frame based on the selection operation; and
outputting an arrangement of the object as print data.
